**Europäisches Patentamt**

**European Patent Office**

**Office européen des brevets**

(19)

(11) Publication number: **0 151 821**

**B1**

(12) **EUROPEAN PATENT SPECIFICATION**

(45) Date of publication of patent specification: **12.07.89**

(21) Application number: **84201662.8**

(22) Date of filing: **19.11.84**

(51) Int. Cl.⁴: **G 01 S 13/22,** G 01 S 13/54

(54) **Pulse radar apparatus employing a plurality of pulse repetition periods.**

(30) Priority: **15.12.83 NL 8304315**

(43) Date of publication of application:
**21.08.85 Bulletin 85/34**

(45) Publication of the grant of the patent:
**12.07.89 Bulletin 89/28**

(84) Designated Contracting States:
**BE CH DE FR GB IT LI NL SE**

(56) References cited:
**FR-A-1 200 799**
**FR-A-1 579 822**
**FR-A-2 118 179**
**FR-A-2 182 011**
**US-A-3 765 017**

(73) Proprietor: **HOLLANDSE SIGNAALAPPARATEN B.V.**
**Zuidelijke Havenweg 40 P.O. Box 42**
**NL-7550 GD Hengelo (NL)**

(72) Inventor: **Bergman, Jan**
**Ververstraat 40**
**NL-7481 KP Haaksbergen (NL)**

Courier Press, Leamington Spa, England.

## Description

The invention relates to a pulse radar apparatus, whose transmitter is designed to generate similar transmitter pulses employing a plurality of pulse repetition periods, and whose receiver is designed to transform detected echo signals to video signals.

Such a pulse radar apparatus is known from the U.S. Patent Specification 3,855,593. The pulse radar apparatus disclosed in this patent however has the disadvantage that through the addition of longer pulse repetition periods to the transmitter system the data rate from the range sectors corresponding with the shorter pulse repetition periods is strongly reduced. Just for the short-range sector of a pulse radar apparatus a great need for a higher data rate is felt to obtain a better distinction between clutter and video signals from stationary targets on the one hand and video signals from moving targets on the other hand.

The present invention has for its object to provide a pulse radar apparatus of the type set forth in the opening paragraph, whereby the above disadvantage is obviated to a significant extent, which apparatus operates in accordance with the need expressed above.

According to the invention, this object is achieved with the apparatus defined in Claim 1. The receiver of the pulse radar apparatus of the type set forth in the opening paragraph is provided with: a switching-pulse generator suitable for generating, in several pulse repetition periods, at least a portion of a switching-pulse series each pulse repetition period, which switching pulses are associated with switching intervals related to certain successive range sectors; a distributor controlled by said switching-pulse generator for selecting video signals in range sectors; and MTI filter units connected separately to the distributor for generating Doppler signals, representative of moving targets, from the video signals supplied by selection.

The invention will now be explained with reference to the accompanying figures, of which:

Fig. 1 is a schematic diagram of an embodiment of a pulse radar apparatus;

Figs. 2A—C are timing diagrams pertaining to a first embodiment of a pulse radar apparatus shown in Fig. 1;

Fig. 3 shows an embodiment of a filter configuration for an embodiment of a pulse radar apparatus shown in Fig. 1;

Figs. 4A—C are timing diagrams pertaining to a second embodiment of a pulse radar apparatus shown in Fig. 1;

Figs. 5A—D are timing diagrams pertaining to a third embodiment of a pulse radar apparatus shown in Fig. 1;

Figs. 6 and 7 are characteristics illustrating the advantages obtained with the invention when using a pulse radar appartus as shown in Fig. 1.

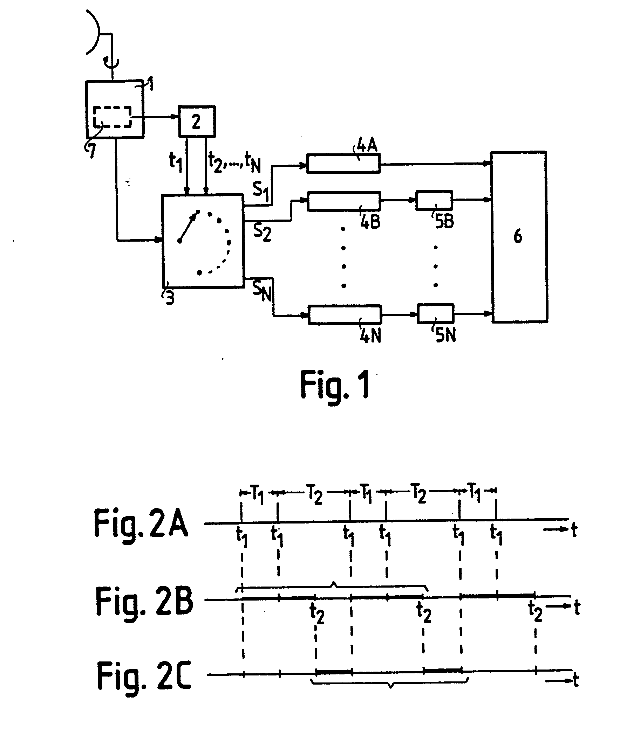

Fig. 1 illustrates a pulse radar apparatus provided with a transmitting and receiving unit 1, whose transmitter is designed to generate similar transmitter pulses employing a plurality of pulse repetition periods, and whose receiver is designed to transform detected echo signals to video signals to be delivered as output signals by the receiver. Such a transmitting and receiving unit is described, for example, by M. I. Skolnik, in "Introduction to Radar Systems", McGraw-Hill Kogakusha, Ltd., second edition, Chapter 4.

For simplicity, the operating principle of the pulse radar apparatus is described for the case as shown in Fig. 2A, whereby transmitter pulses with two pulse repetition periods $T_1$ and $T_2$, where $T_2 = 2T_1$, are generated alternately.

The invention aims at including the video processing of the range interval, associated with pulse repetition periods $T_1$ and covered during the longer pulse repetition period $T_2$, under that of the short pulse repetition period $T_1$ to achieve the contemplated increase of the data rate for the short range interval. In accordance with this concept, the receiver is provided with:

a. a switching-pulse generator 2, producing a switching signal $t_1$, coinciding with the transmitter pulse, and—within the pulse repetition period $T_2$—a switching signal $t_2$ appearing a period $T_1$ after the transmitter pulse; the switching-pulse generator 2 is thereto aligned with the transmitter signal and connected, for instance, to a pulse modulator 7 (or a trigger-pulse generator activating this modulator);

b. a distributor 3, controlled by the switching-pulse generator 2; in the embodiment here described the distributor 3 has two switching positions $S_1$ and $S_2$ for selecting in range sectors the video signals supplied by the receiver 1. Distributor 3 will be in position $S_1$ during pulse repetition period $T_1$ and during the period $T_1$ directly following the transmitter pulse within pulse repetition period $T_2$ and in position $S_2$ during the remaining part of pulse repetition period $T_2$;

c. a plurality of MTI filter units 4A—4B, in the case in question two, separately connected to the distributor outputs (3) associated with switching positions $S_1$ and $S_2$. Filter unit 4A, connected to the distributor output (3) associated with switching position $S_1$, will therefore provide for the processing of the video signals, obtained during each pulse repetition period $T_1$ and during the time intervals $T_1$ directly following the transmitter pulses within pulse repetition periods $T_2$. Filter unit 4B, on the other hand, provides for the processing of the video signals supplied within each pulse repetition period $T_2$, but after time interval $T_1$ situated therein.

A feasible embodiment of the switching pulse generator 2 is obtained with the aid of a clock generator, which is reset at each generation time S of a transmitter pulse (e.g. through the signal supplied by unit 7), thereby itself producing another switching pulse t as reset pulse for the distributor 3 to reset or to hold the distributor 3 in position $S_1$. The clock generator counts the time interval $T_1$ and produces a switching signal $t_2$ to set distributor 3 to switching position $S_2$. Switch-

ing signal $t_2$ however is not to be fed to distributor 3 at the end of pulse repetition period $T_1$. To this effect the clock generator in switching pulse generator 2 is provided with logic means supplying distributor 3 with a switching signal $t_2$ for switching position $S_2$, only if the Boolean formula

$$\bar{S} \wedge t_2$$

is logically true.

The time lapse in Fig. 2B for switching positions $S_1$ and that in Fig. 2C for switching positions $S_2$ are part of the time lapse in Fig. 2A for pulse repetition periods $T_1$ and $T_2$.

Fig. 2B shows that filter unit 4A processes video signals during each pulse repetition period $T_1$ and during subsequent time intervals $T_1$ of the pulse repetition periods $T_2$, but not during the remaining part of pulse repetition periods $T_2$. Filter unit 4A should therefore be adapted to this situation.

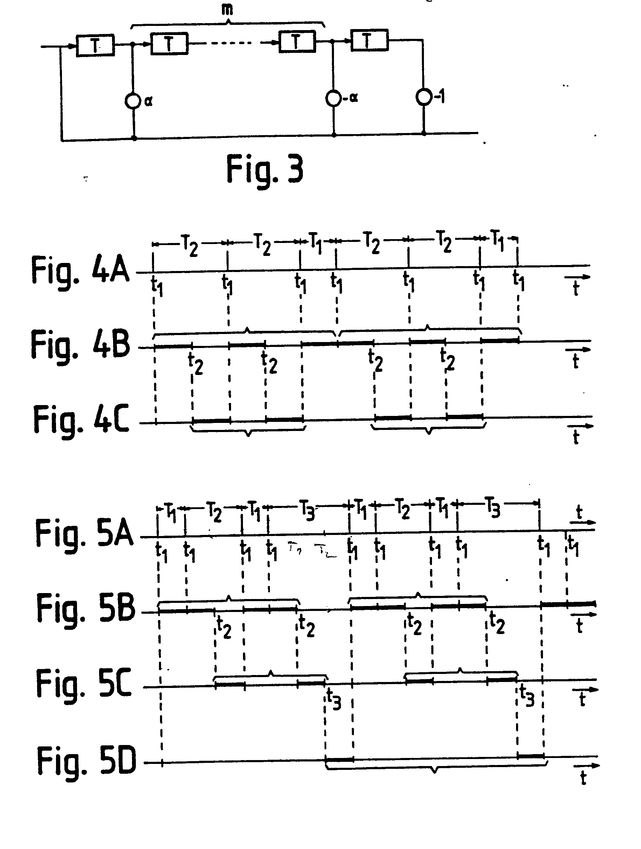

With the use of delay line cancellers the triple canceller configuration obtained for m=2 in Fig. 3 can be successfully applied as filter unit 4A. The units denoted by T in Fig. 3 represent delay lines, while α denotes a weighting factor, to which the video signals supplied are subjected. The method of calculating weight factors in such filters is known from the European Patent Application published under number 0 069 415. Accordingly, a suitable canceller for the time intervals shown in Fig. 2B is obtained with the weighting factor α=−2.

For the processing of the video signals supplied by distributor 3 in switching position $S_2$ a double canceller can be successfully used as filter unit 4B, whereby delay lines of $3T_1$ are employed.

Since the data rate for filter unit 4A is twice as large as that of unit 4B, the average output signal strength of filter unit 4A will differ from that of unit 4B. A correction must therefore be made for this difference; this is achieved, for instance, by subjecting the output signals of filter unit 4B to a certain standard correction. This correction may be effected as a separate process in a unit 5B after the particular canceller 4B, but can also be performed in the weighting factors of this canceller.

Finally, the filtered and possibly corrected output signals of filter units 4A and 4B are combined in a circuit 6 and utilised for presentation, recording, processing or the like. For the short range sector the data rate is 4/3 times greater in comparison with the existing situation (with one single pulse repetition period $T_2$) and for the longer-range sector 2/3 times greater; this fits in with the objective.

It is however possible to select a different interrelation for pulse repetition periods $T_1$ and $T_2$. Pulse repetition periods $T_1$ and $T_2$ can be chosen in accordance with the relation $T_2 = m T_1$, where m>2, while for the processing of video signals from the short-range sector corresponding with the period $T_1$ the canceller configuration shown in Fig. 3 is applicable as filter unit 4A. In such a case, the video signals within the switching pulse intervals determined by switching position $S_2$ are supplied to filter unit 4B, functioning as a single canceller and including delay means with a delay time $(m+1)T_1$.

It is also possible to present the pulse repetition periods in a different sequence, for example in accordance with a repeating series $T_2, T_2, T_1$, where $T_2 = 2T_1$, as shown in Fig. 4A. Fig. 4B illustrates that for the time intervals, in which the video signals from the range sector corresponding with pulse repetition period $T_1$ are detected, the switching pulse generator 2 produces the switching pulse $t_1$ to set the distributor 3 to switching position $S_1$. In Fig. 4B the time intervals are grouped by means of accolades. In these time intervals the distributor 3 set to switching position $S_1$, supplies the filter unit 4A with the video signals; for the video signals from the time intervals grouped in succession by means of accolades, a filter unit 4A can be designed as a double canceller to effect the filter process each time interval. The remaining time intervals having a length of $T_2 - T_1$ with pulse repetition periods $T_2$ are also grouped by means of accolades in Fig. 4C, showing that in this case a single canceller can be applied for filter unit 4B. For the short range sector the data rate has increased 6/5 times in comparison with the existing situation, and for the more distant sector 4/5 times.

It is further possible to use a transmitting unit suitable for the generation of similar transmitter pulses employing more than two pulse repetition periods. If the generation of the transmitter pulse occurs with three pulse repetition periods $T_1, T_2$ and $T_3$, with the interrelations $T_2 = 2T_1$ and $T_3 = 3T_1$ according to the repeating series $T_1, T_2, T_1, T_3$ (see Fig. 5A) or $T_2, T_3, T_2, T_1$, then it is possible to process the supplied video signals in combination during pulse repetition periods $T_1$ and the periods $T_1$ following the transmitter pulses of pulse repetition periods $T_2$ and $T_3$. The number of filter units connected to the distributor 3 is then three, viz. 4A, 4B and 4C. During the time intervals, in which the video signals from the range sector corresponding with pulse repetition period $T_1$ are detected, the switching pulse generator 2 has to generate the switching pulse $t_1$, whereby the distributor 3 is set to switching position $S_1$; in Fig. 5B the time intervals are grouped by means of accolades. During these time intervals the filter unit 4A is supplied with the video signals via the distributor 3 in the switching position $S_1$. A feasible embodiment of a filter unit 4A is obtained with the configuration of Fig. 3, where m=2. The first range interval determined by pulse repetition period $T_1$ is followed by a second range interval, whose magnitude is determined by a time interval of $T_2 - T_1$. Such time intervals are formed by the remaining parts of pulse repetition periods $T_2$ and by parts in pulse repetition periods $T_3$, which follow the time intervals $T_1$, as shown in Fig. 5C. The time intervals combined for the video processing in filter unit 4B are grouped by means of accolades in Fig. 5C. For filter unit 4B a single canceller can be used. The third range interval is determined by the remaining part having a length of $T_3-T_2$ within pulse repetition period $T_3$, as shown in Fig. 5D. Also in this case, a single canceller can be used for filter unit 4C, processing the grouped time intervals in combination. Further a correction unit 5C is connected to filter unit 4C to normalise the video signal strength. The required siwtching pulses $t_1$, $t_2$ and $t_3$ have to be provided by switching pulse generator 2, namely at the instant of generation of the transmitter pulse, as well as after time intervals $T_1$ and $T_2$ following the generation of this transmitter pulse. The switching pulses should be omitted at times when a following transmitter pulse is generated; therefore, switching pulse generator 2 is set to switching positions $S_2$ and $S_3$ at the instant the Boolean functions

$$\overline{S} \wedge t_2 \text{ and } \overline{S} \wedge t_3,$$

respectively, are logically true.

The invention is not confined to the division of the longest pulse repetition period into maximum three time intervals (and a corresponding number of parallel grouped filter units); also other divisions of the longer pulse repetition periods (and a corresponding number of parallel grouped filter units) are possible. However, as already described in the cited European Patent Application, a choice should be made for symmetric or antisymmetric transversal filter configurations, implying restrictions as to the choice in the arangement of the pulse repetition periods to be used, especially with analogue filter systems. With digital filters however these problems are present to a less extent, since video signals recieved at an inopportune instant with respect to the selected filter configuration can be stored temporarily and utilised at the instant the filter process permits this.

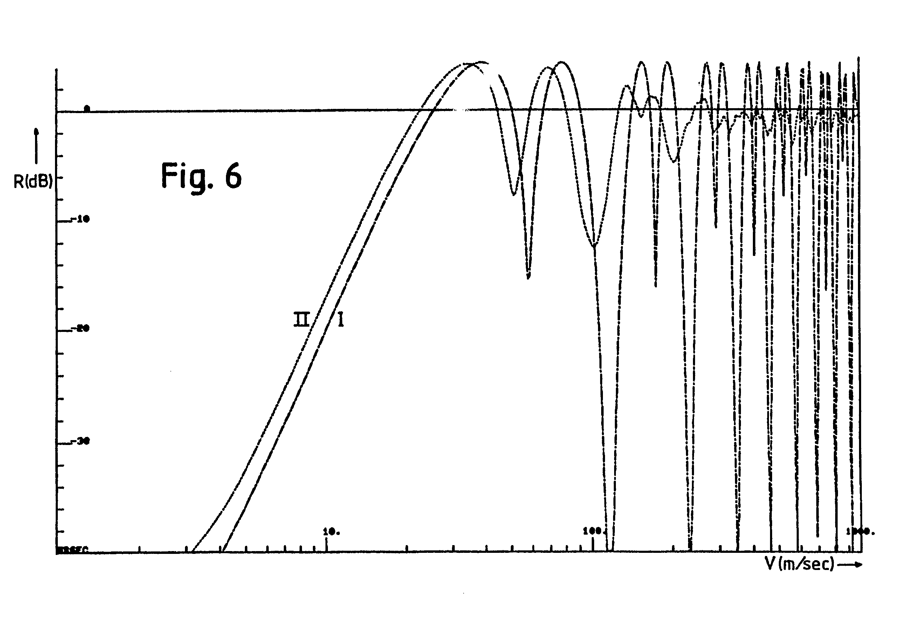

Besides the above restrictions (symmetric or antisymmetric transversal filter), there are other restrictions as to the choice of a filter configuration; as already stated in the cited European Patent Application, there are symmetric or antisymmetric transversal filter configurations with z-transformed transfer functions comprising, in addition to one or several roots $z=1$ suiting a canceller, also a root $z=-1$, belonging to a zero velocity filter. For this reason, such a filter configuration would not be suitable for application as a canceller. Such a filter configuration has a filter characteristic showing several very sharp, narrow dips. For the 7000 Hz frequency such a characteristic is shown in Fig. 6 by curve I, depicting the response (R) in dB against the target speed in m/sec. By replacing the appropriate series of pulse repetition periods by a staggered version (e.g. k=0.8) of these pulse repetition periods, a filter characteristic is obtained, where the above-mentioned dips have disappeared to a significant extent.

Certain series of pulse repetition periods permit the use of more complex filter configurations instead of the more simple ones. For example, the series of time intervals in Fig. 2B permits the processing of video signals by a single canceller as well as by a triple canceller according to Fig. 3, while the video signals of the time intervals in Fig. 2C can be processed in a single canceller, as well as in a double canceller.

The above concepts will now be checked against the embodiment of a pulse radar apparatus shown in Fig. 1 and operating in accordance with the repeating series of two pulse repetition periods $T_1$ and $T_2$ in Fig. 2A. For the video processing of the range interval corresponding with pulse repetition period $T_1$ an anti-symmetric triple canceller is used as shown in Fig. 3, where m=2; here the z-transformed transfer function is expressed by:

$$E_o \cdot E_I^{-1} = z^{-4}\{z^4 + \alpha z^3 - \alpha z - 1\},$$

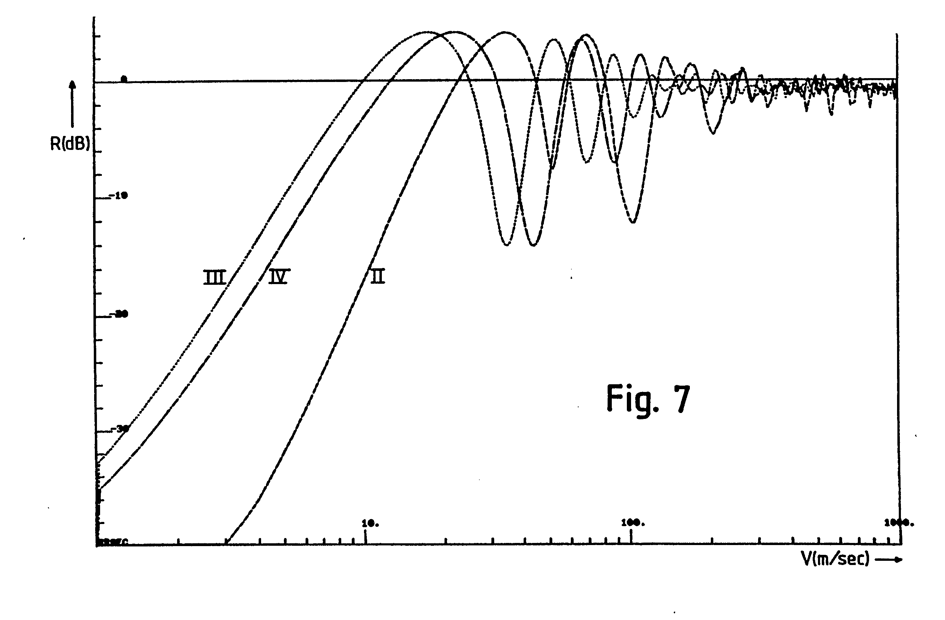

where $E_I$ and $E_o$ are the input and output, respectively. For $\alpha = -2$ and a shift frequency of 7000 Hz in the delay lines of this filter, curve I in Fig. 6 shows the characteristic of this filter. The z-transformed transfer function comprises, in addition to the roots $z=1$, also a root $z=-1$, which is characteristic of a zero velocity filter. The transfer characteristic in question thus contains zero points, which are characteristic of a canceller or a zero-velocity filter. With the introduction of a stagger factor k=0.8 (so that the pulse repetition periods are 5600 Hz and 7000 Hz) a characteristic according to curve II of Fig. 6 is obtained for the triple canceller; it is notable that the dips at the zero points are not so steep any more. For the remaining part of the range interval of the pulse radar apparatus and hence for the time intervals in Fig. 2C a double canceller is used; the transfer characteristic of this canceller is shown by curve III in Fig. 7. Also curve II is included once again in Fig. 7. For comparison, this figure also shows the characteristic IV, pertaining to a pulse radar apparatus using only one canceller, whereby the pulse radar apparatus inclusive of the canceller operates in accordance with one single pulse repetition frequency of 3000 Hz with a stagger factor k=0.8. It can clearly be seen that, through the wider fixed clutter region and its greater edge steepness, the characteristic of curve II presents a better suppression of the fixed targets and clutter signals in the near environment of the pulse radar apparatus than the characteristic of curve IV. On the other hand, for the more distant radar ranges, the concession made is that the fixed clutter region is smaller than that of the characteristic of curve IV; in practice however, this is considered permissible.

Furthermore the resolution of video signals into I and Q components and the subsequent filter process disclosed in Fig. 1, can be applied for each component.

Finally, it should be noted that the invention is not limited to the above embodiments. Repeating series of a plurality of staggered pulse repetition periods $T_1$, $T_2$,...., $T_N$ are feasible in a certain combination. This requires a distributor having a corresponding number of switching positions $S_1$, $S_2$,..., $S_N$ and, connected thereto, the same number of filter units 4A—4N (including correction units).

## Claims

1. A pulse radar apparatus comprising
—a transmitter (1) arranged to generate a sequence of radar pulses having a plurality of different pulse repetition periods,
—a receiver (1—6) arranged to convert echo signals to video signals, the receiver including MTI filter means (4A—4N) and signal processing means (6),
characterised in that
—the receiver further comprises a switching pulse generator (2) arranged to generate separate switching pulses uniquely identifying the instants that coincide with the transmission of the radar pulses and with the expiry, in each repetition period, of any other repetition period shorter than the instantaneous repetition period, and a distributor network (3) controlled by said switching pulses so as to apply the video signal to one of a plurality of outputs determined by an associated one of the separate switching pulses,
—the MTI filter means comprises a plurality of separate filter units (4A—4N) each of which is connected to a different one of said outputs and which are arranged to supply the signal processing means (6) with the Doppler signals representative of the moving targets in the respective range sections from which the video signals supplied to said filter units are derived by the action of the switching pulses.

2. Pulse radar apparatus as claimed in claim 1, characterised in that each filter unit (4A—4N) comprises means (T) for delaying video signals over a time interval corresponding to an integer multiple of the shortest repetition period.

## Patentansprüche

1. Ein Impulsradargerät, bestehend aus
—einem für die Erzeugung von aufeinanderfolgen Radarimpulsen mit unterschiedlichen PRF eingerichteten Sender (1),
—einem für die Umwandlung von Echosignalen in Videosignale eingerichteten MTI-Filtermittel (4A—4N) und Signalverarbeitungsmittel (6) umfassenden Empfänger (1—6),
dadurch gekennzeichnet, daß
—der Empfänger weiter einen Schaltimpulsgenerator (2) besitzt, eingerichtet für die Erzeugung von separaten Schaltimpulsen, die auf eindeutige Weise die Momente identifizieren, die mit der Radarimpulsaussendung und dem Ablaufen—innerhalb jeder PRF—einer jeden anderen PRF zusammenfallen, die kürzer als die momentane PRF ist sowie ein von den erwähnten Schaltimpulsen gesteuertes Verteilernetzwerk (3), um das Videosignal einem der Vielzahl von Ausgängen zuzuführen, welcher von einem assoziierten Impuls der separaten Schaltimpulse bestimmt worden ist,
—die MTI-Filtermittel eine Vielzahl von separaten mit einem der erwähnten Ausgänge verbundenen und für die Zuführung der Doppler-Signale zu den Signalverarbeitungsmitteln (6) eingerichteten Filtereinheiten (4A—4N) umfassen, welche Doppler-Signale charakteristisch für die Bewegtziele in den verschiedenen Entfernungsabschnitten sind, aus denen die mit Hilfe der Schaltimpulse und den erwähnten Filtereinheiten zugeführten Videosignale abgeleitet worden sind.

2. Impulsradargerät gemäß Anspruch 1, dadurch gekennzeichnet, daß jede Filtereinheit (4A—4N) Mittel (T) umfaßt, zur Verzögerung der Videosignale über ein Zeitintervall, das mit einem Vielfachen von Ganzzahlen der kürzesten PRF übereinstimmt.

## Revendications

1. Un dispositif de radar à impulsions comprenant:
—un émetteur (1) prévu pour générer une séquence d'impulsions radar présentant une pluralité de périodes de répétition d'impulsions différentes,
—un récepteur (1—6) prévu pour convertir des signaux d'écho en signaux vidéo, le récepteur comprenant des moyens de filtrage (4A—4N) de type MTI et des moyens (6) de traitement de signaux,
caractérisé en ce que:
—le récepteur comporte en outre un générateur d'impulsions de commutation (2) prévu pour générer des impulsions de commutation séparées identifiant uniquement les instants qui coïncident avec l'émission des impulsions radar et avec la fin, dans chaque période de répétition, de toute autre période de répétition plus courte que la période de répétition instantanée, et un réseau (3) formant distributeur commandé par lesdites impulsions de commutation afin d'appliquer le signal vidéo à l'une d'une pluralité de sorties déterminées par une impulsion associé parmi les impulsions de commutation séparées.
—les moyens de filtrage de type MTI comprenant une pluralité d'unités de filtrage séparées (4A—4N) dont chacune est reliée à une sortie différente parmi lesdites sorties et qui sont prévues pour fournir, aux moyens (6) de traitement des signaux, les signaux Doppler représentatifs des cibles mobiles dans les sections de portée respectives à partir desquelles les signaux vidéo fournis auxdites unités de filtrage sont obtenus par l'action des impulsions de commutation.

2. Dispositif de radar à impulsions comme revendiqué à la revendication 1, caractérisé en ce que chaque unité de filtrage (4A—4N) comprend des moyens (T) pour retarder des signaux vidéo sur un intervalle de temps correspondant à un nombre entier multiple de la période de répétition la plus courte.

Fig. 1

Fig. 2A

Fig. 2B

Fig. 2C

**Fig. 3**

**Fig. 4A**

**Fig. 4B**

**Fig. 4C**

**Fig. 5A**

**Fig. 5B**

**Fig. 5C**

**Fig. 5D**

Fig. 6

R(dB)

II   I

V (m/sec) →

EP 0 151 821 B1

Fig. 7

R(dB)

V(m/sec) →

III    IV    II

EP 0 151 821 B1